# EUROPEAN PATENT APPLICATION

(11) **EP 1 641 179 A1**
(43) Date of publication of application: **29.03.2006**
(21) Application number: 04746825.1
(22) Date of filing: 25.06.2004
(51) Int. Cl.: H04L 12/28, H04Q 7/36

(54) **TRANSMITTER APPARATUS, RECEIVER APPARATUS AND RADIO COMMUNICATION APPARATUS**

(30) Priority: 27.06.2003 JP 2003184619
(71) Applicant: MITSUBISHI DENKI KABUSHIKI KAISHA, Tokyo 100-8310 (JP)
(72) Inventor: TAJIMA, Yoshikatsu, c/o Mitsubishi Denki K.K., Tokyo 100-8310 (JP); FUJIMURA, Akinori, c/o Mitsubishi Denki K.K., Tokyo 100-8310 (JP); NAGAI, Yukimasa, c/o Mitsubishi Denki K.K., Tokyo 100-8310 (JP); HIRAI, Hiroaki, c/o Mitsubishi Denki K.K., Tokyo 100-8310 (JP); OCHIAI, Mari, c/o Mitsubishi Denki K.K., Tokyo 100-8310 (JP)
(74) Representative: Zech, Stefan Markus
(86) International application number: PCT/JP2004/009356
(87) International publication number: WO 2005/002141

(57) **Abstract**

A MAC unit (10) divides data to be transmitted into number of applying channels, thereby generating transmission data. An applying-channel notifying unit (11) inserts channel information for identifying an applying channel into a used area of the transmission data. Transmission processing units (20a to 20d) corresponding to the applying channels generate radio frames from the transmission data into which the channel information is inserted, and transmit the generated radio frames to the radio communication apparatus at the reception side.

## Description

### TECHNICAL FIELD

The present invention relates to a transmitter, a receiver, and a radio communication apparatus for transmitting and receiving data using plural channels or carriers, and more particularly, to a transmitter, a receiver, and a radio communication apparatus that have a function of informing an applying channel that is used to transmit data using the channels or the carriers.

### BACKGROUND ART

In general, data transmission and reception in a communication system is controlled in a physical layer (PHY) that is an interface between a data link layer or a media access control (MAC) and a transmission path, and a data link layer for controlling establishment of a link between terminals that carry out communications before starting communications or a lower layer of the MAC that carries out access control for a radio media.

A radio communication apparatus used in a radio communication system includes a PHY unit, a MAC unit, a transmission buffer, and a reception buffer. The PHY unit converts control information and user information of a higher layer into data of a format called a burst, and a base station and a radio terminal exchange the data in the converted format.

In a radio communication system using an orthogonal-frequency-division-multiplexing (OFDM) modulation system, a PHY unit selects a transmission mode corresponding to a propagation environment such as a distance between a base station and a radio terminal and interference conditions, and keeps proper communication quality based on the prescription of the OFDM.

The MAC unit controls the physical layer by determining a radio terminal that carries out communications based on the transmission buffer and the reception buffer of a base station and a radio terminal, and a transmission amount. In a radio communication system using a time sharing multiplexing system in which an access point carries out an integrated control, a MAC unit of the access point determines a method of using a time domain direction of a carrier based on a predetermined allocation request amount, thereby managing data transmission and reception between the access point and the radio terminal. A MAC unit of the radio terminal transmits and receives data using a slot permitted by the access point, following the determination of the access point. The predetermined allocation request amount is, for example, an allocation request amount set in advance, or an allocation request amount calculated based on a data amount of the transmission buffer addressed to each terminal.

In a radio communication system using a carrier sense multiple access (CSMA), a MAC unit of an access point establishes a synchronization with each radio terminal using a notification signal and a control signal periodically transmitted. A MAC unit of a radio terminal executes a carrier sense for a constant time following the notification signal and the control signal from the access point, confirms that the radio terminal does not compete with other radio terminal, and exchanges data with the access point.

The transmission buffer and the reception buffer store transmission data and reception data until the transmission and reception is completed. In the case of managing these data for each user connection, the transmission buffer stores data for each user connection, and notifies the MAC unit of the stored amount of data. The transmission buffer transmits the data following the control of transmission. The reception buffer confirms received data. When there is a transmission error in the received data, the reception buffer requests the access point to transmit the data again.

As explained above, in a radio communication system, a base station or an access point communicates with a radio terminal. Along the recent spread of the Internet, data transmitted between a base station or an access point and a radio terminal includes not only e-mails and text data that do not require a real time processing, but also an increasing amount of moving picture data that require the real time processing, requiring an increase in the communication speed. To meet this request, a radio communication system achieves an increase in the communication speed by increasing a transmission capacity using plural channels.

A first conventional technology using plural channels is a personal handy phone system (PHS) using time division multiple access-time division duplex (TDMA-TDD). In the PHS system, a frequency is divided into slots on a time domain. Four slots are allocated to a downlink from a base station to a mobile station, and four slots are allocated to an uplink from the mobile station to the base station. One of the slots of the uplink and the downlink is used for a control slot, and three slots are used for communication channels. When starting a communication, the mobile station transmits a request for establishing a link channel to the base station, using the control channel of the uplink. The base station notifies the mobile station of an applying channel, using the control channel of the downlink. The base station establishes a link in one of the three communication channels. When plural slots are to be used, the mobile station requests the base station to add a communication channel, using the communication channel in which the link is established. The base station allocates a slot requested in the communication channel addition request, and connects a call to the allocated slot. After the allocated slot is connected, the base station and the mobile station communicate with each other using plural slots (see, for example, Nonpatent Document 1).

According to a second conventional technology, plural channels are secured and allocated in advance to a route between a specific communication unit system and a specific terminal unit system that require a wide transmission band. With this arrangement, communications are executed using plural channels (see, for example, Patent Document 1).

According to a third conventional technology, a local station and the other station determine each other in advance two channels that are to be used in apparatuses of both stations. The apparatuses are set to be able to communicate with each other using these channels. After setting the channels, the two channels are used as fixed channels (see, for example, Nonpatent Document 2).
Nonpatent Document 1
ARIB RCR STD-28
Nonpatent Literature 2
IEEE802.11a
Patent Document 1
Japanese Patent Application Laid-open No. 2002-135304

However, according to the first conventional technology, the base station and the mobile station first communicate with each other using one channel to determine plural applying channels to determine specific plural applying channels. Therefore, the processing carried out until data is transmitted using the plural channels becomes complex.

In addition, according to the first conventional technology, the control information is used to determine plural channels to be use. Therefore, data cannot be transferred immediately after communication is started. Consequently, throughput decreases at the start of the communication until the applying channel is determined. Particularly, when high-speed communication is to be executed using plural channels, communication using the control information carried out until the plural channels are determined is not desirable.

Furthermore, according to the first conventional technology, during a communication using plural channels, it becomes necessary for a communication terminal to change a channel of a communication terminal to be used for each burst due to a change in the communication environment such as a change in a state of a transmission path and occurrence of interference during a high-speed movement of the communication terminal. In this case, it becomes necessary to notify a change of the applying channel from the transmitter to the receiver. This makes the control more complex, and throughput decreases.

According to the second and the third conventional technologies, plural applying channels are fixed. Therefore, when an interference wave enters from other system and when a ratio of a desired wave to an interruption wave becomes small, the number of retransmission increases and throughput decreases.

The present invention has been achieved in view of the above problems. It is an object of the present invention to provide a transmitter, a receiver, and a communication apparatus capable of communicating with each other using plural channels, without requiring the transmitter to notify the receiver of the applying channel in advance.

### DISCLOSURE OF INVENTION

The present invention provides a transmitter that is applied to a radio communication system and that transmits a radio frame to a receiver using one or plural channels that can be used. The transmitter includes a transmission MAC unit that divides data into number of applying channels, and generates transmission data for each channel using the divided data, when the data is to be transmitted using two or more channels a radio-frame generating unit that generates a radio frame containing each transmission data and a transmission applying-channel notifying unit that inserts channel information to identify a channel into each radio frame. The transmitter transmits each radio frame containing the channel information.

According to the present invention, at the time of transmitting data using two or more channels, channel information to identify plural channels that are used to transmit data is inserted into a radio frame to be transmitted.

### BRIEF DESCRIPTION OF DRAWINGS

Fig. 1 is a schematic for illustrating a configuration of a radio communication system according to a first embodiment of the present invention;
Fig. 2 is a schematic for illustrating a configuration of a radio communication apparatus shown in Fig. 1;
Fig. 3 is a schematic for illustrating a channel used by the radio communication apparatus according to the first embodiment;
Fig. 4 is a schematic for illustrating a format of a radio frame generated by a radio-frame generating unit shown in Fig. 2;
Fig. 5 is a schematic for illustrating a scrambler of the radio-frame generating unit shown in Fig. 2;
Fig. 6 is a schematic for illustrating a descrambler of a data processing unit shown in Fig. 2;
Fig. 7 is a flowchart of a processing procedure for a transmission operation of the radio communication apparatus according to the first embodiment;
Fig. 8 is a flowchart of a processing procedure for a reception operation of the radio communication apparatus according to the first embodiment;
Fig. 9 is a schematic for illustrating a configuration of a radio communication apparatus according to a second embodiment of the present invention;
Fig. 10 is a flowchart of a processing procedure for a transmission operation of the radio communication apparatus according to the second embodiment;
Fig. 11 is a flowchart of a processing procedure for a reception operation of the radio communication apparatus according to the second embodiment;
Fig. 12 is a schematic for illustrating a configuration of a preamble of a wireless local-area-network (LAN) frame;
Fig. 13 is a schematic for illustrating an example of a special preamble pattern according to a third embodiment of the present invention; and
Fig. 14 is a schematic for illustrating a configuration of the wireless LAN frame according to the third embodiment.

### BEST MODE(S) FOR CARRYING OUT THE INVENTION

Exemplary embodiments of a transmitter, a receiver, and a radio communication apparatus according to the present invention will be explained below in detail with reference to the accompanying drawings. Note that the invention is not limited by the embodiments.

### First embodiment

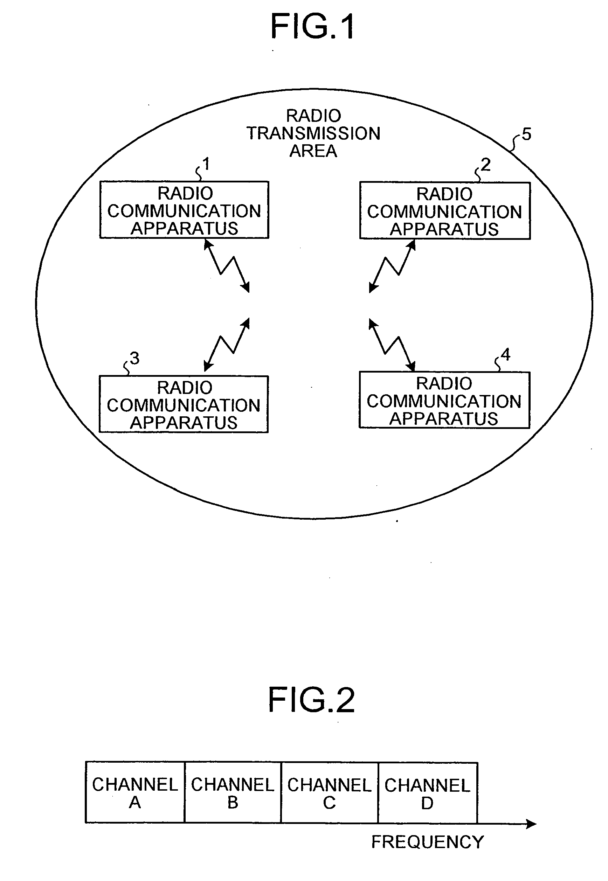

A radio communication apparatus according to a first embodiment of the present invention is explained with reference to Figs. 1 to 8. Fig. 1 is a schematic for illustrating a configuration of a radio communication system to which the radio communication apparatus according to the first embodiment is applied. The radio communication system according to the first embodiment includes a plurality of radio communication apparatuses 1 to 4 (in this example, four apparatuses are used, and the number of channels has nothing to do with the number of radio communication apparatuses) that communicate with each other in a radio transmission area 5 using plural channels (in this example, four channels). All the radio communication apparatuses 1 to 4 can communicate with each other, involving no hidden terminal, within the radio transmission area 5, which means that the four radio communication terminals 1 to 4 are located within the radio transmission area 5. The radio communication system has a usable frequency band divided into four, including a channel A, a channel B, a channel C, and a channel D, as shown in Fig. 2. The radio communication system can communicate using the four channels as a maximum. The radio communication apparatuses 1 to 4 can communicate in various patterns, such as between one apparatus and one apparatus, between one apparatus and three apparatuses, and between four apparatuses and four apparatuses.

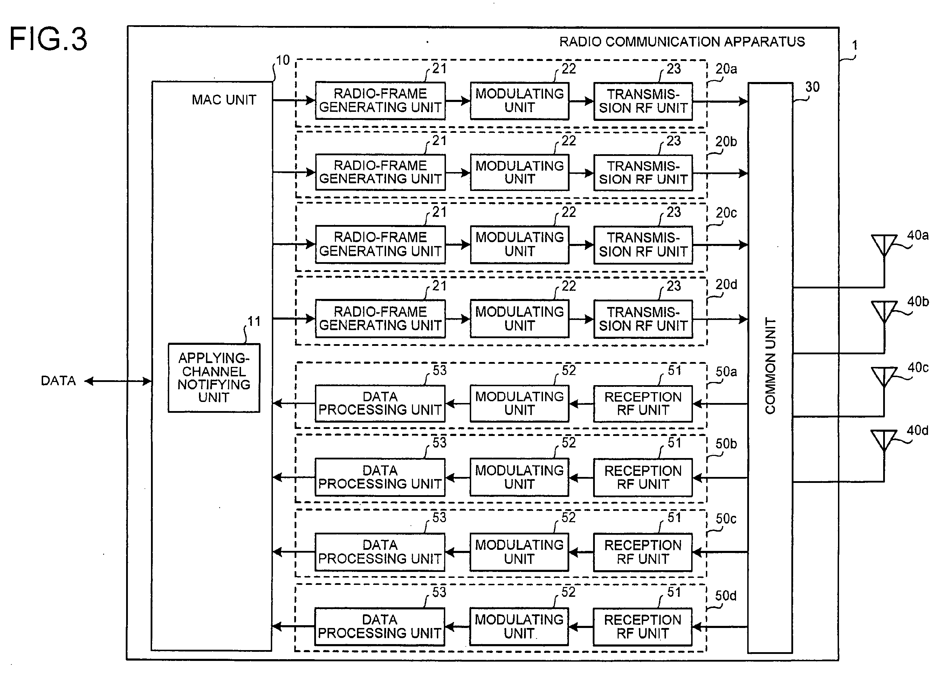

Each of the radio communication apparatuses 1 to 4 shown in Fig. 1 has the same function. The function of the radio communication apparatus is explained below with reference to a block diagram of a configuration of the radio communication apparatus 1 shown in Fig. 3. The radio communication apparatus 1 includes a transmitting unit, a receiving unit, and a common unit 30. The transmitting unit has plural (four, in this example) transmission processing units 20a to 20d corresponding to the number of channels that the local apparatus can use. The receiving unit includes reception processing units 50a to 50d, and antennas 40a to 40d. The antenna 40a, the transmission processing unit 20a, and the reception processing unit 50a correspond to the channel A. The antenna 40b, the transmission processing unit 20b, and the reception processing unit 50b correspond to the channel B. The antenna 40c, the transmission processing unit 20c, and the reception processing unit 50c correspond to the channel C. The antenna 40d, the transmission processing unit 20d, and the reception processing unit 50d correspond to the channel D.

A MAC unit 10 has functions of a transmission MAC unit and a reception MAC unit in the claims. An applying-channel notifying unit 11 has functions of a transmission applying-channel notifying unit and a reception applying-channel notifying unit in the claims.

The transmission processing units 20a to 20d and the common unit 30 achieve the function of a transmitting unit in the claims. The reception processing units 50a to 50d and the common unit 30 achieve the function of a receiving unit in the claims. A radio-frame generating unit 24 and a modulating unit 22 achieve a function of a radio-frame generating unit in the claims.

The MAC unit 10 has the applying-channel notifying unit 11. When data to be transmitted is input from the outside, the MAC unit 10 determines channels that can be used, and allocates the data to be transmitted to the determined channels. The MAC unit 10 generates transmission data for each determined channel. The MAC unit 10 determines whether reception data input from each of the reception processing units 50a to 50d contains channel information. The MAC unit 10 reassembles a frame of the reception data of each of the channels, containing channel information addressed to the local apparatus, selected by the applying-channel notifying unit 11, and outputs the frame to the controller.

The applying-channel notifying unit 11 inserts channel information into an unused area of transmission data for each channel generated by the MAC unit 10. The channel information is used to identify an applying channel. An identical frame mark or applying-channel-number information is used for the channel information.

The identical frame mark is a specific pattern of a predetermined number of bits, and is determined for each of the radio communication apparatuses 1 to 4 within the radio communication system. The applying-channel-number information shows number of applying channels and positions of the channels. Specifically, channel numbers are set to the radio communication system in advance. For example, a channel number 1 is set to the channel A, a channel number 2 is set to the channel B, a channel number 3 is set to the channel C, and a channel number 4 is set to the channel D. When two channels including the channel A and the channel B are to be applying channel information of the channel A includes "2" as the number of applying channels and "1" as the channel number, and channel information of the channel B includes "2" as the number of applying channels and "2" as the channel number. Alternatively, all channels are related to bits like "1100", for example, to show in which channel transmission data is inserted or which channel is used. For example, "1" indicates a channel into which transmission data is inserted, and "0" indicates a channel into which transmission data is not inserted. When applying-channel-number information is to be inserted into an unused area, communication apparatus identification information is also inserted into an unused area to identify a radio communication apparatus to which data is addressed out of the radio communication apparatuses 1 to 4 within the radio communication system. For the communication apparatus identification information, the identical frame mark can be used or identification information different from the same fame mark can be used.

In the reception processing, when the MAC unit 10 determines that reception data contains channel information, the applying-channel notifying unit 11 identifies whether the channel information within the reception data is the identical frame mark addressed to the local apparatus of communication apparatus identification information, and selects reception data addressed to the local apparatus. The applying-channel notifying unit 11 outputs the reception data addressed to the local apparatus to the MAC unit 10.

The common unit 30 transmits transmission radio frequency (RF) signals of the channels output from the transmission processing units 20a to 20d via the antennas 40a to 40d, and outputs reception RF signals received via the antennas 40a to 40d to the reception processing units 50a to 50d of the channels. The common unit 30 can be configured by a switch, for example.

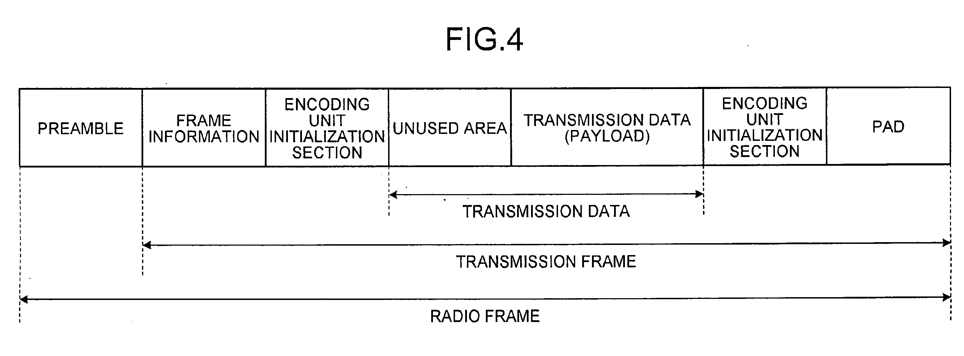

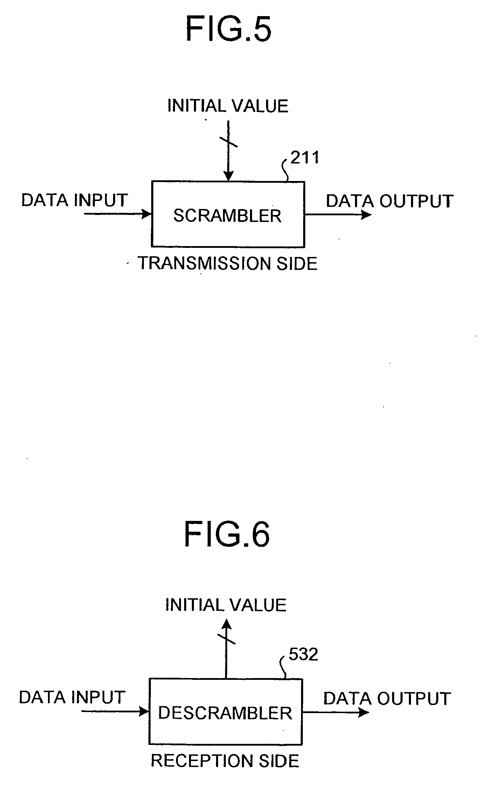

The transmission processing units 20a to 20d have the same function. Each transmission processing unit includes the radio-frame generating unit 21, the modulating unit 22, and a transmission RF unit 23. The radio-frame generating unit 21 generates a transmission frame excluding a preamble to establish synchronization within the radio frame shown in Fig. 4. In other words, the radio-frame generating unit 21 generates a transmission frame including a modulation system used in the modulating unit 22, frame information such as a puncturing rate and a frame length, an encoding-unit initializing section for initializing an encoding unit, an unused area, transmission data, an encoding-unit initializing section, and dummy data PAD. The radio-frame generating unit 21 encodes, punctures, and interleaves the transmission data input from the MAC unit 10, using an encoding system determined in advance for the generated transmission frame, an error correction puncturing rule, and an interleave length. The radio-frame generating unit 21 has a scrambler 211 shown in Fig. 5. The radio-frame generating unit 21 inputs a predetermined part of the transmission frame into the scrambler 211 to scramble the transmission frame, and outputs the scrambled transmission frame to the modulating unit 22.

The modulating unit 22 modulates the transmission frame based on a modulation system determined in advance, generates a radio frame having a preamble added to the front of the frame information of the modulated data as shown in Fig. 4, and outputs the generated radio frame to the transmission RF unit 23. The transmission RF unit 23 converts a base band frequency of the radio frame into a radio frequency to generate a transmission RF signal, amplifies the generated transmission RF signal, and outputs the amplified transmission RF signal to the common unit 30.

The reception processing units 50a to 50d have the same function. Each reception processing unit has a reception RF unit 51, a demodulating unit 52, and a data processing unit 53. The reception RF unit 51 converts the reception RF signal input from the common unit 30 into a base band signal, and outputs the converted base band signal to the demodulating unit 52.

The demodulating unit 52 demodulates the base band signal based on a demodulation system determined in advance, and outputs demodulated data to the data processing unit 53. The data processing unit 53 has a descrambler 532 shown in Fig. 6. The data processing unit 53 inputs a predetermined part of the demodulated data into the descrambler 532 to descramble the modulated data, and de-interleaves and decodes the unused area between the encoding-unit initializing sections and the transmission data of the radio frame shown in Fig. 4, based on the frame information of the descrambled demodulated data, thereby carrying out a forward error correction (FEC). The data processing unit 53 outputs the forward error-corrected reception data to the MAC unit 10.

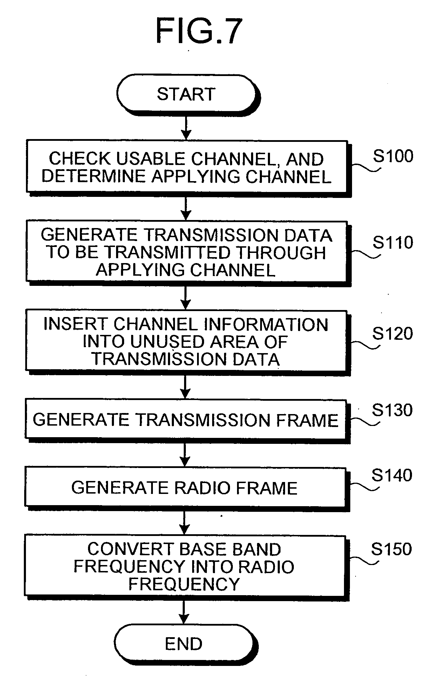

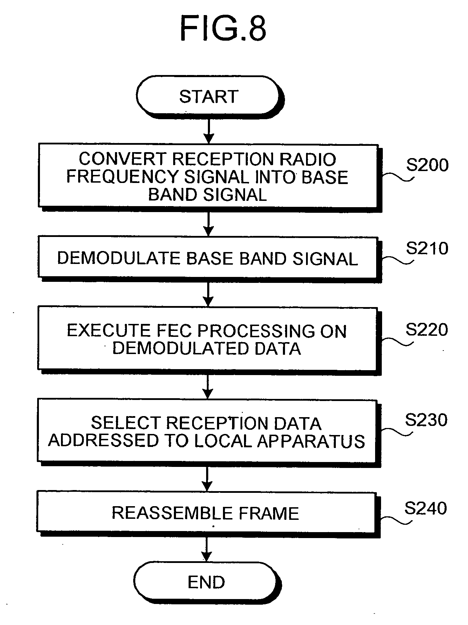

The operation of the radio communication system according to the first embodiment is explained below taking an example of communication carried out from the radio communication apparatus 1 to the radio communication apparatus 2 with reference to flowcharts shown in Figs. 7 and 8.

First, the operation that the radio communication apparatus 1 carries out to transmit data to the radio communication apparatus 2 is explained with reference to the flowchart shown in Fig. 7. When data to be transmitted is input and when this data is to be transmitted using plural channels, the MAC unit 10 checks usable channels and determines applying channels (step S100). Specifically, the MAC unit 10 carries out a reception processing of the channels A to D shown in Fig. 2 using the reception processing units 50a to 50d, and executes a carrier sense for each channel and measures a reception level. When a carrier cannot be detected or when a reception level is at or below a predetermined level, the MAC unit 10 determines that this channel is not being used, and determines that this channel is to be used.

When the applying channel is determined, the MAC unit 10 divides the transmission data into the number of applying channels, and generates transmission data for the applying channels (step S110). For example, when the channel A and the channel C can be used, the MAC unit 10 divides the transmission data into two, and generates transmission data for the channel A and the transmission data for the channel C.

The applying-channel notifying unit 11 inserts channel information into the unused area of each transmission data generated by the MAC unit 10 (step S120). When the identical frame mark is to be used for the channel information, the applying-channel notifying unit 11 inserts a special pattern of the radio communication apparatus 2 into the unused area of the channel A and the channel C, respectively. When applying-channel-number information is to be used for the channel information, communication apparatus identification information and applying-channel-number information corresponding to the radio communication apparatus 2 are inserted into the unused area of the channel A and the channel C, respectively. In this case, the applying-channel-number information to be inserted into the channel A is the number of applying channels "2" and the channel number "1", or "1010" by relating each channel to a bit. The applying-channel-number information to be inserted into the channel C is the number of applying channels "2" and the channel number "3", or "1010" by relating each channel to a bit.

When the applying-channel notifying unit 11 inserts channel information into the unused area, the MAC unit 10 outputs transmission data of each channel containing the channel information to the radio-frame generating unit 21. In this case, the MAC unit 10 outputs the transmission data of the channel A to the radio-frame generating unit 21 of the transmission processing unit 20a, and outputs the transmission data of the channel C to the radio-frame generating unit 21 of the transmission processing unit 20c.

The radio-frame generating unit 21 of the transmission processing unit 20a generates a transmission frame (see Fig. 4) using the transmission data input from the MAC unit 10, the modulation system used in the modulating unit 22, a puncturing rate, and a frame length. The radio-frame generating unit 21 encodes, punctures, and interleaves the transmission data input from the MAC unit 10, using an encoding system determined in advance for the generated transmission frame, an error correction puncturing rule, and an interleave length (step S130). The radio-frame generating unit 21 inputs a predetermined part of the processed transmission frame into the scrambler 211 to scramble the transmission frame, and outputs the scrambled transmission frame to the modulating unit 22 of the transmission processing unit 20a.

The modulating unit 22 of the transmission processing unit 20a modulates the transmission frame based on a modulation system determined in advance, thereby generating modulated data, adds a preamble to the front of the frame information of the generated modulated data, and generates a radio frame as shown in Fig. 4. The modulating unit 22 outputs the generated radio frame to the transmission RF unit 23 (step S140).

The transmission RF unit 23 converts a base band frequency of the radio frame into a radio frequency to generate a transmission RF signal, amplifies the generated transmission RF signal, and outputs the amplified transmission RF signal to the common unit 30 (step S150).

The radio-frame generating unit 21, the modulating unit 22, and the transmission RF unit 23 of the transmission processing unit 20c carry out the operations similar to those of the radio-frame generating unit 21, the modulating unit 22, and the transmission RF unit 23 of the transmission processing unit 20a, to the transmission data of the channel C (steps S130 to S150).

The common unit 30 outputs the transmission RF signal input from the transmission RF unit 23 of the transmission processing unit 20a to the radio transmission area 5 via the antenna 40a, and outputs the transmission RF signal input from the transmission RF unit 23 of the transmission processing unit 20c to the radio transmission area 5 via the antenna 40c.

The operation that the radio communication apparatus 2 carries out to receive data transmitted from the radio communication apparatus 1 is explained next with reference to a flowchart shown in Fig. 8. The common unit 30 receives RF signals of the channels from the radio transmission area 5 using the antennas 40a to 40d, and outputs the received RF signals to the reception processing units 50a to 50d.

The reception RF unit 51 of the reception processing unit 50a converts the reception RF signal input from the common unit 30 and received by the antenna 40a into a base band signal, and outputs the converted base band signal to the demodulating unit 52 (step S200).

The demodulating unit 52 of the reception processing unit 50a demodulates the base band signal based on a demodulation system determined in advance, and outputs the demodulated data to the data processing unit 53 (step S210).

The data processing unit 53 of the reception processing unit 50a inputs a predetermined part of the demodulated data into the descrambler 532 to descramble the demodulated data. The data processing unit 53 de-interleaves and decodes the frame information of the radio frame shown in Fig. 4, and extracts the information of a puncturing rate and a frame length. The data processing unit 53 de-interleaves and decodes the encoding-unit initializing section, the unused area, the transmission data (payload), the encoding-unit initializing section, and the PAD, thereby executing a forward error correction (FEC), based on the extracted information (step S220). The data processing unit 53 outputs the forward error-corrected reception data to the MAC unit 10.

The reception RF unit 51, the demodulating unit 52, and the data processing unit 53 of the reception processing units 50b to 50d carry out operations similar to those of the reception RF unit 51, the demodulating unit 52, and the data processing unit 53 of the reception processing units 50a, respectively, to the reception RF signals input from the common unit 30 and received by the antennas 40b to 40d, respectively (steps S200 to S220).

The MAC unit 10 determines whether each reception data input from the reception processing units 50a to 50d contains channel information, and outputs reception data containing the channel information to the applying-channel notifying unit 11.

The applying-channel notifying unit 11 identifies the channel information of the reception data input from the MAC unit 10, and selects reception data addressed to the local apparatus (step S230). The radio communication apparatus 1 transmits data to the radio communication apparatus 2 using the channel A and the channel C as described above. Therefore, the reception data of the reception processing unit 50a and the reception processing unit 50c respectively contain channel information. When the radio communication apparatus 3 transmits data to the radio communication apparatus 4 using the channel B and the channel D, the reception data of the channel B and the channel D also contain channel information. Therefore, four reception data received by the reception processing units 50a to 50d are input to the applying-channel notifying unit 11. The applying-channel notifying unit 11 identifies whether the channel information of the four reception data show the local apparatus, and selects reception data addressed to the local apparatus. Specifically, when the channel information is the identical frame mark, the applying-channel notifying unit 11 determines whether the identical frame mark of each reception data is a special pattern of the local apparatus. When the channel information contains communication apparatus identification information, the applying-channel notifying unit 11 determines whether the communication apparatus identification information of each reception data is identification information of the local apparatus. Because the radio communication apparatus 1 transmits data to the radio communication apparatus 2 using the channel A and the channel C, the applying-channel notifying unit 11 identifies that the channel information contained in the reception data from the reception processing unit 50a and the reception processing unit 50c are the data addressed to the local apparatus. The applying-channel notifying unit 11 notifies the MAC unit 10 that the reception data of the reception processing unit 50a and the reception processing unit 50c are the data addressed to the local apparatus.

The MAC unit 10 reassembles the frame data of each reception data notified from the applying-channel notifying unit 11 (step S240). Specifically, because the radio frame data shown in Fig. 4 is reception data, the MAC unit 10 reassembles the frame data by combining the transmission data within the reception data of each channel together into one transmission data. In other words, the MAC unit 10 combines the transmission data that are divided and allocated to the channels by the MAC unit 10 of the radio communication apparatus 1 at the transmission side, into one frame of data. When the channel information is the identical frame mark or when the applying-channel-number information is related to bits, it can be determined in advance that the data are sequentially combined in the order of channel numbers of the applying channels. When the number of applying channels and the channel number are used for the applying-channel-number information, the data can be combined in the order of the channel numbers, thereby obtaining the data in the state of before being divided at the transmission side. The MAC unit 10 outputs the reception data of the reassembled frame to the outside.

As explained above, according to the first embodiment, the applying-channel notifying unit 11 of the radio communication apparatus at the transmission side inserts the channel information for identifying plural applying channels for the data transmission into the unused area of the transmission data generated by the MAC unit 10. The applying-channel notifying unit 11 transmits the radio frame containing the transmission data into which the channel information is inserted. The applying-channel notifying unit 11 of the radio communication apparatus at the reception side extracts a transmission frame addressed to the local apparatus based on the channel information contained in the transmission data of the received radio frame. Therefore, the radio communication apparatus at the reception side can extract the transmission frame addressed to the local apparatus and reassemble a transmission frame, without the process of notifying applying channels for the data transmission. Even when the radio communication apparatus at the transmission side changes applying channels for the data transmission at each time of transmitting the radio frame, the radio communication apparatus at the reception side can reassemble the received frame.

Because the MAC unit 10 of the radio communication apparatus at the transmission side checks channels of the radio communication system and determines the applying channels, it is possible to carry out communications using channels of a satisfactory condition of a transmission path. Consequently, throughput can be increased by restricting the number of times of retransmission.

Because the channel information is inserted into the unused area of the transmission frame, the processing can be carried out using only the MAC layer.

While the channel information is inserted into the unused area according to the first embodiment, the channel information can be also inserted into the encoding-unit initializing section of the radio frame shown in Fig. 4. In this case, the radio-frame generating unit 21 counts the number of bits from the header bit of the frame information of the transmission frame that is input in the encoding unit (not shown) within the radio-frame generating unit 21 that encodes the generated transmission frame, and detects data in the encoding-unit initializing section. When the detected data is an initialization pattern, the radio-frame generating unit 21 initializes the encoding unit using the initialization pattern of the encoding-unit initializing section. When the detected data is not the initialization pattern, that is, when channel information is inserted in the encoding-unit initializing section, the radio-frame generating unit 21 counts the number of bits in the encoding-unit initializing section, and detects the end of the encoding-unit initializing section. The radio-frame generating unit 21 resets the encoding unit at the end of the encoding-unit initializing section, and encodes the unused area and the transmission data of the transmission frame (see Fig. 4).

The frame information contains the information of the modulation system used in the modulating unit 22, the puncturing rate, and the frame length. The radio-frame generating unit 21 calculates a length of the unused area and the transmission data based on the frame length contained in the frame information. The radio-frame generating unit 21 counts the number of bits calculated from the start of the unused area, thereby detecting an end bit of the encoding-unit initializing section after the transmission data. The radio-frame generating unit 21 resets the encoding unit at the end of the encoding-unit initializing section.

As explained above, when the radio-frame generating unit 21 detects the encoding-unit initializing section and resets the encoding unit, channel information can be inserted into the encoding-unit initializing section. Only the data to be transmitted can be inserted into the transmission data, and the channel information can be notified without decreasing the transmission capacity and without expanding the radio frame.

### Second embodiment

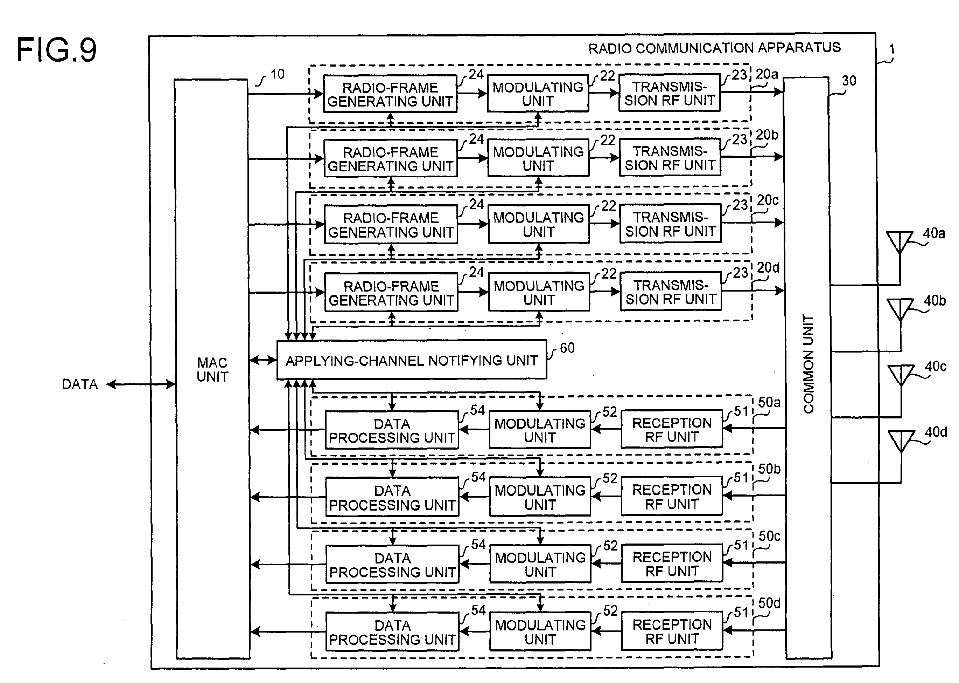

A radio communication apparatus according to a second embodiment of the present invention is explained with reference to Figs. 9 to 11. The radio communication apparatus according to the second embodiment is similar to the radio communication apparatus according to the first embodiment shown in Fig. 1, and therefore, their redundant explanation is omitted.

Fig. 9 is a schematic for illustrating a configuration of the radio communication apparatus 1 according to the second embodiment. The radio communication apparatus 1 shown in Fig. 3 is different from the radio communication apparatus 1 shown in Fig. 2 according to the first embodiment as follows. A radio-frame generating unit 24 is provided in place of the radio-frame generating unit 21 within the transmission processing units 20a to 20d. A data processing unit 54 is provided in place of the data processing unit 53 within the reception processing units 50a to 50d. An applying-channel notifying unit 60 is used in place of the applying-channel notifying unit 11 within the MAC unit 10. Constituent parts that have functions similar to those of the first embodiment are assigned with like reference numerals, and their redundant explanation is omitted.

The applying-channel notifying unit 60 has functions of the transmission applying-channel notifying unit and the reception applying-channel notifying unit in the claims.

The applying-channel notifying unit 60 determines whether to execute any one or both of a special preamble processing and a special scrambling to the transmission data of an applying channel determined by the MAC unit 10. When the special preamble processing is to be executed, the applying-channel notifying unit 60 outputs a special preamble pattern determined in advance in the radio communication apparatus at the data transmission side to the modulating unit 22 of the applying channel. When the special scramble processing is to be executed, the applying-channel notifying unit 60 outputs channel information to the radio-frame generating unit 24 of the applying channel, as an initial value of scrambling.

The applying-channel notifying unit 60 outputs to the MAC unit 10 a notification about whether a preamble pattern is a special preamble pattern input from the demodulating unit 52 of the reception processing units 50a to 50d, or channel information having the equivalent initial value obtained by the descramble processing input from the data processing unit 54.

The radio-frame generating unit 24, in addition to achieving the function of the radio-frame generating unit 21 according to the first embodiment, carries out a scramble processing using channel information for the initial value and using a predetermined part of the radio frame as input data, when the channel information is input as the initial value of scrambling.

When a special preamble pattern is input, the modulating unit 22 inserts the input special preamble pattern into the preamble shown in Fig. 4.

The demodulating unit 52 determines whether the preamble within the radio frame is a special preamble pattern. When the preamble within the radio frame is a special preamble pattern, the demodulating unit 52 notifies the applying-channel notifying unit 60 to this effect.

The data processing unit 54, in addition to achieving the function of the data processing unit 53 according to the first embodiment, outputs an initial value output by the descramble processing on the applying-channel notifying unit 60 when the demodulated data is descrambled using a predetermined part as input data.

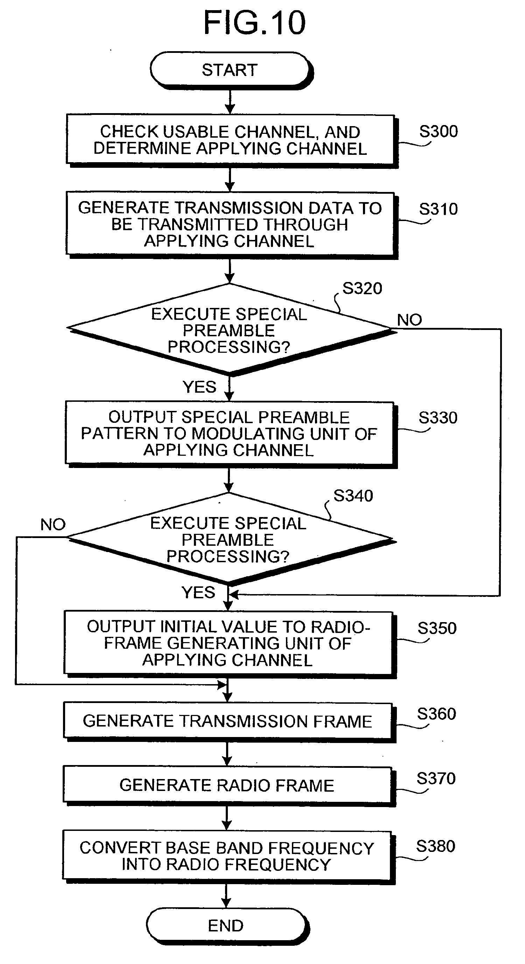

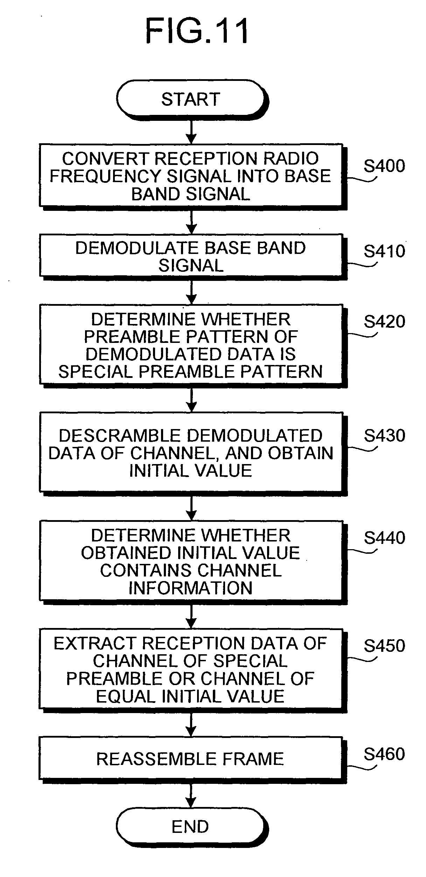

The operation of the radio communication system according to the second embodiment is explained below taking an example of communication carried out from the radio communication apparatus 1 to the radio communication apparatus 2 with reference to flowcharts shown in Fig. 10 and Fig. 11. The operations at steps S300 and S310 where the MAC unit 10 checks usable channels and generates a transmission frame corresponding to the determined applying channel are the same as the operations according to the first embodiment, and therefore, their detailed explanation is omitted.

First, the operation that the radio communication apparatus 1 carries out to transmit data to the radio communication apparatus 2 is explained with reference to the flowchart shown in Fig. 10. When data to be transmitted is input and when this data is to be transmitted using plural channels, the MAC unit 10 checks usable channels and determines applying channels, and generates transmission data corresponding to the determined applying channels (steps S300 and S310). The MAC unit 10 notifies the applying-channel notifying unit 60 of the applying channels. In this example, the MAC unit 10 determines that the channel A and the channel C are to be used, and notifies the applying-channel notifying unit 60 of these two channels.

The applying-channel notifying unit 60 determines whether a special preamble processing is to be executed to transmission frames of the channels notified from the MAC unit 10 (step S320). When a special preamble processing is to be executed, the applying-channel notifying unit 60 outputs a special preamble pattern corresponding to the data-transmitting radio communication apparatus, to the modulating unit 22 of the applying channels (step S330). Because the channel A and the channel C are used, the applying-channel notifying unit 60 outputs a special preamble pattern corresponding to the radio communication apparatus to the modulating unit 22 of the transmission processing unit 20a and the transmission processing unit 20c, respectively.

The applying-channel notifying unit 60 determines whether a special scramble processing is to be executed to transmission frames of the channels notified from the MAC unit 10 (step S340). When a special scramble processing is to be executed, the applying-channel notifying unit 60 outputs channel information to the radio-frame generating unit 24 of the applying channels, as an initial value of scrambling (step S350). Because the channel A and the channel C are used, the applying-channel notifying unit 60 outputs the channel information to the radio-frame generating unit 24 of the transmission processing unit 20a and the transmission processing unit 20c, respectively, to the radio communication apparatus 2.

The radio-frame generating unit 24 of the transmission processing unit 20a generates a transmission frame (see Fig. 4) using the transmission data input from the MAC unit 10. The radio-frame generating unit 24 encodes, punctures, and interleaves the transmission data input from the MAC unit 10, using an encoding system determined in advance for the generated transmission frame, an error correction puncturing rule, and an interleave length. When channel information is input as an initial value of scrambling, the radio-frame generating unit 24 inputs a predetermined part of the transmission frame into the scrambler 211 using the input channel information, and scrambles the transmission frame (step S360). The radio-frame generating unit 24 outputs the scrambled transmission frame to the modulating unit 22 of the transmission processing unit 20a.

The modulating unit 22 of the transmission processing unit 20a modulates the transmission frame based on a modulation system determined in advance, thereby generating the radio frame shown in Fig. 4. The modulating unit 22 outputs the generated radio frame to the transmission RF unit 23 (step S370). In this case, when a special preamble pattern is input, the modulating unit 22 inserts the special preamble pattern into the preamble of the radio frame shown in Fig. 4.

The transmission RF unit 23 converts a base band frequency of the radio frame into a radio frequency to generate a transmission RF signal, amplifies the generated transmission RF signal, and outputs the amplified transmission RF signal to the common unit 30 (step S380).

The radio-frame generating unit 24, the modulating unit 22, and the transmission RF unit 23 of the transmission processing unit 20c carry out the operations similar to those of the radio-frame generating unit 24, the modulating unit 22, and the transmission RF unit 23 of the transmission processing unit 20a to the transmission data of the channel C (steps S360 to S380).

The common unit 30 outputs the transmission RF signal input from the transmission RF unit 23 of the transmission processing unit 20a to the radio transmission area 5 via the antenna 40a, and outputs the transmission RF signal input from the transmission RF unit 23 of the transmission processing unit 20c to the radio transmission area 5 via the antenna 40c.

The operation that the radio communication apparatus 2 carries out to receive data transmitted from the radio communication apparatus 1 is explained next with reference to a flowchart shown in Fig. 11. The common unit 30 receives RF signals of the channels from the radio transmission area 5 using the antennas 40a to 40d, and outputs the received RF signals to the reception processing units 50a to 50d.

The reception RF unit 51 of the reception processing unit 50a converts the reception RF signal input from the common unit 30 and received by the antenna 40a into a base band signal, and outputs the converted base band signal to the demodulating unit 52 (step S400).

The demodulating unit 52 of the reception processing unit 50a demodulates the base band signal based on a demodulation system determined in advance, and outputs the demodulated data to the data processing unit 53 (step S410). In this case, the demodulating unit 52 determines whether a preamble within the radio frame is a special preamble pattern (step S420). When the preamble within the radio frame is a special preamble pattern, the demodulating unit 52 notifies the applying-channel notifying unit 60 that the preamble within the radio frame is a special preamble pattern.

The data processing unit 54 of the reception processing unit 50a de-interleaves and decodes the unused area between the encoding-unit initializing sections and transmission data of the radio frame shown in Fig. 4, thereby executing a forward error correction (FEC), and generates reception data, based on the frame information of the demodulated data. The data processing unit 54 of the reception processing unit 50a inputs a predetermined part of the demodulated data into the descrambler 532, thereby descrambling the demodulated data, and obtains an initial value (step S430). The data processing unit 54 determines whether the obtained initial value contains channel information (step S440). When the obtained initial value contains channel information, the data processing unit 54 outputs the obtained initial value to the applying-channel notifying unit 60.

The reception RF unit 51, the demodulating unit 52, and the data processing unit 54 of the reception processing units 50b to 50d carry out operations similar to those of the reception RF unit 51, the demodulating unit 52, and the data processing unit 54 of the reception processing units 50a, respectively, to the reception RF signals input from the common unit 30 and received by the antennas 40b to 40d, respectively (steps S400 to S440).

The applying-channel notifying unit 60 extracts reception data having a notification input from the demodulating unit 52 of the reception processing units 50a to 50d that a preamble pattern is a special preamble pattern, or reception data of a channel having the equivalent initial value obtained by the descramble processing input from the data processing unit 54 (step S450). As described above, the radio communication apparatus 1 transmits data to the radio communication apparatus 2 using the channel A and the channel C. Therefore, the applying-channel notifying unit 60 receives the information that the preamble of the radio frame is a special preamble pattern from the demodulating unit 52 of the reception processing unit 50a and the reception processing unit 50c, respectively, or an initial value of scrambling from the data processing unit 54. When the radio communication apparatus 3 and the radio communication apparatus 4 are communicating with each other using the channel B and the channel D, the applying-channel notifying unit 60 receives the information that the preamble of the radio frame is a special preamble pattern from the demodulating unit 52 of the reception processing unit 50b and the reception processing unit 50d, respectively, or an initial value of scrambling from the data processing unit 54. The applying-channel notifying unit 60 determines whether the notified special preamble pattern or the channel information notified as an initial value is addressed to the local apparatus, and notifies the MAC unit 10 of the special preamble pattern or the channel information addressed to the local apparatus.

The MAC unit 10 reassembles the frame data of each reception data using the channel information input from the applying-channel notifying unit 60 (step S460). In this case, the frames of the reception data of the channel A and the channel C are reassembled. Specifically, because the radio frame data shown in Fig. 4 is reception data, the MAC unit 10 reassembles the frame data by combining the transmission data within the reception data of each channel together into one transmission data. In other words, the MAC unit 10 combines the transmission data that are divided and allocated to the channels by the MAC unit 10 of the radio communication apparatus 1 at the transmission side, into one frame of data. The MAC unit 10 outputs the reception data of the reassembled frame to the controller.

As explained above, according to the second embodiment, the applying-channel notifying unit 60 of the radio communication apparatus at the transmission side inserts the channel information for identifying plural applying channels for the data transmission as the preamble of the radio frame or as an initial value of the scramble processing. The applying-channel notifying unit 60 transmits the radio frame containing this channel information. The applying-channel notifying unit 60 of the radio communication apparatus at the reception side extracts reception data of a channel containing a transmission frame addressed to the local apparatus, based on the channel information contained in the initial value extracted by the descrambling of the demodulated data. Therefore, the radio communication apparatus at the reception side can extract the transmission frame addressed to the local apparatus and reassemble a transmission frame, without the process of notifying applying channels for the data transmission. Even when the radio communication apparatus at the transmission side changes applying channels for the data transmission at each time of transmitting the radio frame, the radio communication apparatus at the reception side can reassemble the received frame.

Because the channel information is inserted as the preamble of the radio frame or the initial value of the scramble processing, the processing can be carried out using only the physical layer. At the same time, the channel information can be notified without expanding the radio frame.

According to the second embodiment, the demodulating unit 52 determines whether the preamble pattern is a special preamble pattern, and the data processing unit 54 has the descrambler 532 and descrambles the demodulated data. Alternatively, the demodulating unit 52 can have the descrambler 532 and output the descrambled data to the data processing unit 54, and the data processing unit 54 can determine whether the preamble pattern is a special preamble pattern.

Furthermore, according to the second embodiment, the demodulating unit 52 determines whether a preamble pattern is a special preamble pattern, and the descrambler 532 of the data processing unit 54 descrambles the demodulated data, thereby extracting channel information contained in the initial value. Alternatively, any one or both of the determining of the special preamble pattern and the descramble processing can be executed.

### Third embodiment

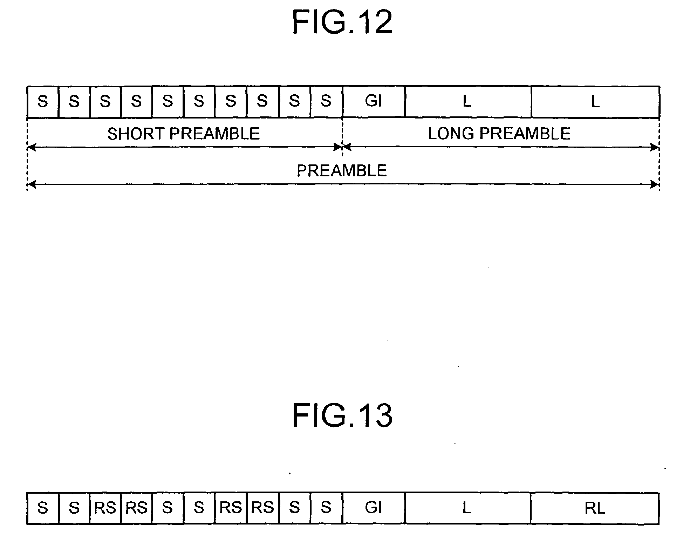

A preamble pattern according to a third embodiment of the present invention is explained with reference to Figs. 12 to 14. According to the second embodiment, a special preamble pattern is used for the preamble of the radio frame, thereby identifying a applying channel. According to the third embodiment, a special preamble pattern when a wireless local-area-network (LAN) is used for the radio communication system is explained.

Fig. 12 is a schematic for illustrating a configuration of a preamble of a wireless LAN frame prescribed by the IEEE802.11a. The preamble of the wireless LAN frame includes a short preamble having ten short training symbols S, and a long preamble having a guard interval GI and two long training symbols L. The short training symbol S is a signal having 16 sample sections. The long training symbol L is a signal having 64 sample sections.

In the wireless LAN, it is known in advance that the preamble includes ten short training symbols S, a guard interval GI, and two long training symbols L in this order. Therefore, a reception side executes a synchronization processing and a frequency deviation subtraction processing that are necessary for a reception processing, by carrying out a correlation processing of the preamble positioned at the head of the received signal.

When the radio communication apparatus 1 according to the second embodiment is used for the wireless LAN, a pattern having reversed polarities of the short training symbols S and the long training symbols L of the preamble shown in Fig. 12 is used as a special preamble pattern. For example, a pattern having symbols as shown in Fig. 13 is used as a special preamble pattern, which includes two short training symbols S, two short training symbols RS having reversed polarities, two short training symbols S, two short training symbols RS having reversed polarities, two short training symbols S, a guard interval GI, a long training preamble L, and a long training symbol RL having a reversed polarity.

Because the preamble of the wireless LAN includes ten short training symbols S and two long training symbols L, there are various patterns in which polarities are reversed. It is sufficiently possible to allocate individual special preamble patterns to a plurality of the radio communication apparatuses 1 within the wireless LAN.

The demodulating unit 52 is set in advance with information that a part of polarities of the preamble are reversed. Correlations of preambles during the synchronization processing are different between the preamble shown in Fig. 12 and the preamble using the special preamble pattern shown in Fig. 13. Based on the difference of correlations, the demodulating unit 52 determines whether the preamble pattern is a special preamble pattern. When the preamble pattern is a special preamble pattern, the demodulating unit 52 notifies the applying-channel notifying unit 60 that the preamble pattern is a special preamble pattern.

Based on the notification from the demodulating unit 52 of the reception processing units 50a to 50d that the preamble pattern is a special preamble pattern, the applying-channel notifying unit 60 determines whether the special preamble pattern indicates the local apparatus, and notifies the MAC unit 10 about a result of the determination made.

When the MAC unit 10 is notified from the applying-channel notifying unit 60 that the input special preamble pattern indicates the local apparatus, the MAC unit 10 reassembles the frame of the reception data of the channel, and outputs the reception data of the reassembled frame to the controller.

As explained above, according to the third embodiment, when data is to be transmitted using plural channels, a special preamble pattern having a part of polarities of the preamble of the wireless LAN reversed is used as a preamble of the wireless LAN frame. Therefore, in the wireless LAN system, it is possible determine whether a normal channel is being used or plural channels are being used, by determining a preamble. The radio communication apparatus at the reception side can extract a transmission frame addressed to the local apparatus and cam reassemble a transmission frame, without using the process of notifying a applying channel for the data transmission. Even when the radio communication apparatus at the transmission side changes applying channels for the data transmission at each time of transmitting the radio frame, the radio communication apparatus at the reception side can reassemble the received frame.

In determining whether a special preamble pattern indicates the local apparatus, when the preamble pattern of the wireless LAN frame is a special preamble pattern that does not indicate the local apparatus, the applying-channel notifying unit 60 can stop the reception processing of the wireless LAN frame after the preamble. With this arrangement, power consumption during the reception processing of the radio communication apparatus can be restricted, and consumption of the batteries can be restricted.

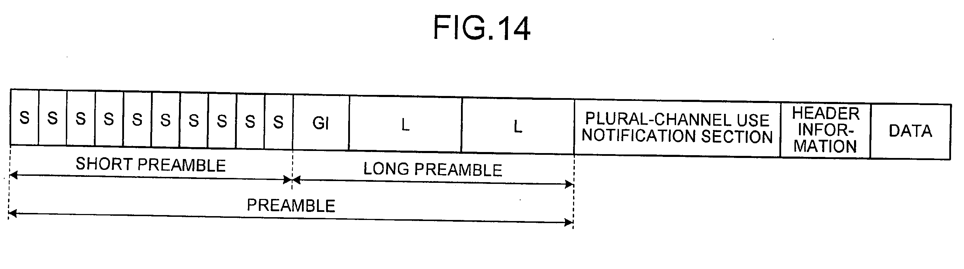

According to the third embodiment, a special pattern is set in the preamble of the wireless LAN frame to notify an applying channel. Alternatively, a plural-channel use notification section for setting channel information can be inserted into between the preamble and the header information of the wireless LAN frame, as shown in Fig. 14. A special preamble pattern can be inserted into the plural-channel use notification section, or plural-channel use notification data for one data time of orthogonal frequency division multiplexing (OFDM) different from the special preamble pattern can be inserted into the plural-channel use notification section.

While a channel according to a frequency is explained according to the first and the second embodiments, the channel is not limited to the channel according to the frequency. For example, a channel can be based on time, a symbol, and space, that is, multi input and multi output (MIMO).

According to the first and the second embodiments, it is explained that the antenna 40a to the antenna 40d correspond to the transmission receiving units 20a to 20d and the reception processing units 50a to 50d at a rate of one to one. This correspondence is not limited to this rate. For example, one or plural antennas can be used. In other words, one antenna can correspond to plural channels.

According to the first and the second embodiments, while the transmission RF unit 23 and the reception RF unit 51 are prepared for each channel, the relation is not limited to this. For example, a single unit of the transmission RF unit 23 can simultaneously process data of four channels. Alternatively, a single unit of the reception RF unit 51 can simultaneously process data of four channels.

### INDUSTRIAL APPLICABILITY

As explained above, the radio communication apparatus according to the present invention is effectively used for a radio communication system that transmits data using plural channels or plural carriers. Particularly, the radio communication apparatus according to the present invention is suitable for a radio communication system in which plural channels or plural carriers to be used need to be notified to the data reception side.

## Claims

1. A transmitter that is applied to a radio communication system, and transmits a radio frame to a receiver using at least one available channel, the transmitter comprising:
a transmission media-access-control unit that divides, when the transmitter transmits data using two or more channels, the data into number of applying channels to be used, and generates transmission data for each of the channels using divided data;
a radio-frame generating unit that generates a radio frame that contains each of the transmission data; and
a transmission applying-channel notifying unit that inserts channel information for identifying a channel into each radio frame, wherein
the transmitter transmits each radio frame containing the channel information.

2. The transmitter according to claim 1, wherein
the transmission applying-channel notifying unit inserts the channel information into an unused area of transmission data generated by the transmission media-access-control unit.

3. The transmitter according to claim 1, wherein
the transmission applying-channel notifying unit inserts the channel information into a preamble of the radio frame.

4. The transmitter according to claim 1, wherein
the transmission applying-channel notifying unit notifies the channel information to the radio-frame generating unit, when the radio-frame generating unit generates the radio frame using the channel information, and
the radio-frame generating unit executes a predetermined transmission processing on each transmission data, and uses the channel information for an initial value of a scramble processing as one of the transmission processing, when generating the radio frame.

5. The transmitter according to claim 1, wherein
the radio-frame generating unit includes an encoding unit that encodes the transmission data contained in the radio frame,
the transmission applying-channel notifying unit inserts the channel information into an encoding-unit initializing section for initializing the encoding unit within the radio frame, and
the radio-frame generating unit initializes the encoding unit at a timing when an input of a pattern of the encoding-unit initializing section to the encoding unit is completed.

6. The transmitter according to claim 1, wherein
the transmission media-access-control unit checks a reception state of a plurality of channels belonging to the radio communication system, and determines the applying channel based on a result of the check.

7. The transmitter according to claim 1, wherein
the channel information includes at least one of an identical frame mark for identifying whether a radio frame received by the receiver is addressed to a local apparatus and applying-channel-number information indicating a channel number of the applying channel.

8. The transmitter according to claim 7, wherein
the applying-channel-number information includes information indicating an order of transmission frames generated by the transmission media-access-control unit by dividing transmission data.

9. The transmitter according to claim 3, wherein
when a wireless local-area-network is used as the radio communication system, the channel information to be inserted into the preamble is a special preamble pattern obtained by inverting a polarity of a part of either one of a short training symbol and a long training symbol that constitute a preamble of the wireless local-area-network frame.

10. A receiver that is applied to a radio communication system, and receives a radio frame from a transmitter in the radio communication system using at least one available channel, the receiver comprising:
a receiving unit that generates reception data by performing a predetermined reception processing on the radio frame received from the channels;
a reception applying-channel notifying unit that extracts reception data addressed to a local apparatus based on either one of information extracted by the reception processing and channel information contained in the reception data; and
a reception media-access-control unit that generates a reception frame by reassembling an original transmission frame from the reception data extracted by the reception applying-channel notifying unit.

11. The receiver according to claim 10, wherein
the receiving unit executes a descramble processing as the predetermined reception processing, and outputs an initial value extracted by the descramble processing to the transmission applying-channel notifying unit.

12. The receiver according to claim 10, wherein
the receiving unit executes a demodulation processing as the predetermined reception processing, and outputs at least one of a preamble generated by the demodulation processing and data of an encoding-unit initializing section contained in demodulated data to the transmission applying-channel notifying unit.

13. A radio communication apparatus that is applied to a radio communication system, and communicates with other radio communication apparatus in the radio communication system using at least one available channel, the radio communication apparatus comprising:
a transmitter that includes
a transmission media-access-control unit that divides, when the transmitter transmits data using two or more channels, the data into number of applying channels to be used, and generates transmission data for each of the channels using divided data;
a radio-frame generating unit that generates a radio frame that contains each of the transmission data; and
a transmission applying-channel notifying unit that inserts channel information for identifying a channel into each radio frame, wherein
the transmitter transmits each radio frame containing the channel information; and
a receiver that includes
a receiving unit that generates reception data by performing a predetermined reception processing on the radio frame received from the channels;
a reception applying-channel notifying unit that extracts reception data addressed to a local apparatus based on either one of information extracted by the reception processing and channel information contained in the reception data; and
a reception media-access-control unit that generates a reception frame by reassembling an original transmission frame from the reception data extracted by the reception applying-channel notifying unit.

14. The radio communication apparatus according to claim 13, wherein
the transmission applying-channel notifying unit inserts the channel information into an unused area of transmission data generated by the transmission media-access-control unit, and
the reception applying-channel notifying unit extracts the channel information from the reception data.

15. The radio communication apparatus according to claim 13, wherein
the transmission applying-channel notifying unit notifies the channel information to the radio-frame generating unit, when the radio-frame generating unit generates the radio frame using the channel information,
the radio-frame generating unit executes a predetermined transmission processing on each transmission data, and uses the channel information for an initial value of a scramble processing as one of the transmission processing, when generating the radio frame, and
the receiving unit executes a descramble processing as the predetermined reception processing, and outputs an initial value extracted by the descramble processing to the transmission applying-channel notifying unit.

16. The radio communication apparatus according to claim 13, wherein
the transmission applying-channel notifying unit inserts the channel information into a preamble of the radio frame, and
the receiving unit executes a demodulation processing as the predetermined reception processing, and outputs a preamble generated by the demodulation processing to the transmission applying-channel notifying unit.

17. The radio communication apparatus according to claim 13, wherein
the radio-frame generating unit includes an encoding unit that encodes the transmission data contained in the radio frame,
the transmission applying-channel notifying unit inserts the channel information into an encoding-unit initializing section for initializing the encoding unit within the radio frame,
the radio-frame generating unit initializes the encoding unit at a timing when an input of a pattern of the encoding-unit initializing section to the encoding unit is completed, and
the receiving unit executes a demodulation processing as the predetermined reception processing, and outputs data of an encoding-unit initializing section contained in demodulated data to the transmission applying-channel notifying unit.

18. The radio communication apparatus according to claim 13, wherein
the transmission media-access-control unit checks a reception state of a plurality of channels belonging to the radio communication system has, and determines the applying channel based on a result of the check.

19. The radio communication apparatus according to claim 13, wherein
the channel information includes at least one of an identical frame mark for identifying whether a radio frame received by the receiver is addressed to a local apparatus and applying-channel-number information indicating a channel number of the applying channel.

20. The radio communication apparatus according to claim 19, wherein
the applying-channel-number information includes information indicating an order of transmission frames generated by the transmission media-access-control unit by dividing transmission data.

21. The radio communication apparatus according to claim 16, wherein
when a wireless local-area-network is used as the radio communication system, the channel information to be inserted into the preamble is a special preamble pattern obtained by inverting a polarity of a part of either one of a short training symbol and a long training symbol that constitute a preamble of the wireless local-area-network frame.
